# EUROPEAN PATENT SPECIFICATION

(11) **EP 2 757 900 B1**
(45) Date of publication and mention of the grant of the patent: **20.01.2021**
(21) Application number: 12774919.0
(22) Date of filing: 19.09.2012
(51) Int. Cl.: A23K 10/20, A23K 10/22, A23K 10/37, A23P 30/25, A23L 13/40, A23L 13/60, A23L 17/00

(54) **A PROCESS FOR MANUFACTURING AN ANIMAL FEED OR FOODSTUFF**
VERFAHREN ZUR HERSTELLUNG EINES TIERFUTTERS ODER LEBENSMITTELS
PROCÉDÉ DE FABRICATION D'ALIMENTS OU DE PRODUITS ALIMENTAIRES POUR ANIMAUX

(30) Priority: 19.09.2011 DE 102011113776
(43) Date of publication of application: 30.07.2014
(73) Proprietor: Mars, Incorporated, McLean, VA 22101-3383 (US)
(72) Inventor: SCHLEBUSCH, Johannes P., 27321 Thedinghausen (DE); GRAEBER, Carsten, 27308 Kirchlinteln (DE)
(74) Representative: Scholz, Volker
(86) International application number: PCT/EP2012/003897
(87) International publication number: WO 2013/041213

(56) References cited:
- WO-A1-2011/076341
- WO-A2-2008/121018
- US-A1- 2009 068 336
- US-A1- 2010 068 368
- US-B1- 6 613 372
- Anonymous: "ASPIC AUX CRABES", , 20 June 2004 (2004-06-20), XP055626016, Retrieved from the Internet: URL:https://www.marmiton.org/recettes/rece tte_aspic-aux-crabes_21338.aspx#d43621-p1 [retrieved on 2019-09-25]

## Description

The present invention relates to a process for manufacturing an animal feed or foodstuff. The invention is defined by the appended claims.

In the animal feed and food industry, a problem which arises in a variety of ways is how to manufacture simply and efficiently products which in particular have the appearance of natural or original pieces of meat or fish, but which are manufactured from smaller meat and fish offcuts or meat or fish-like components.

In this connection, products are well-known which are manufactured using meat or fish emulsions.

Meat and fish emulsions are understood to mean materials which preferably contain meat and/or fish raw materials, but in addition may also contain a certain amount of meat and/or fish byproducts such as offal, meat and fish remnants, fish parts, fish offcuts and the like.

The general problem in this connection is, that in the course of processing these raw materials, the original texture of the materials used is almost completely lost during the inevitable sterilisation step. This texture and appearance are, however, key factors for the acceptance by people and animals of the foodstuff and animal feed produced.

EP1047307B1, for example, discloses a process for manufacturing an animal feed or foodstuff in which the different streams of material are placed one on top of the other in layers and then subjected to process conditions under which one stream of material liquefies and another solidifies.

DE102006031794A1 discloses a process for manufacturing an animal feed or foodstuff in which a second stream of material is dispersed in the first stream of material in laminar fashion, so that the second stream of material is distributed in the first stream of material in the form of droplets and the combined streams of material are then discharged via a nozzle and solidified WO2011076341 as well discloses a process for manufacturing an animal feed or foodstuff in wich a second stream of material is dispersed in the first stream of material in laminar fashion.

The animal feed or foodstuffs produced according to processes from the state of the art are, however, still not satisfactory with regard to the fibrous meat or fish structure/texture. It is also frequently the case that a difference is noticed compared to the natural or fibrous texture of natural original pieces of meat and fish and their shape and/or size distribution.

It is therefore an object of the present invention to provide a process for manufacturing animal feed or foodstuffs which overcomes the disadvantages from the state of the art, and which in particular provides products which at least come very close to natural meat and fish pieces in terms of texture, appearance and shape.

The problem is solved by a process for manufacturing an animal feed or foodstuff comprising the steps of:
(i) providing at least one first stream of material comprising a meat and/or fish emulsion, and at least one second stream of material, comprising at least one gel-forming and/or gel-like substance,
(ii) feeding the second stream of material into the first stream of material in the form of layers and/or coarsely dispersing the second stream of material into the first stream of material in the form of droplets with a size of at least 0.3 to 8 mm,
(iia) discharging the combination of materials obtained in step (ii) through a nozzle or screen plate,
(iii) solidifying at least the first stream of material contained in the combination of materials obtained in step (ii), and
(iv) cutting the combination of materials obtained in step (iii), substantially perpendicularly to the discharge direction, into slices with a thickness of about 0.6 - 6 mm, wherein the slices disintegrate incompletely into pieces, wherein incomplete disintegration means disintegration which does not occur at all the layers of gel.

Feeding the second stream of material coarsely dispersed in the form of droplets, as described in step (ii), is understood to mean dispersing, during which the second stream of material is at least partially incompletely mixed into the first stream of material, so that the second stream of material spreads out in the first stream of material in the form of droplets with a size of at least 0.3 to 8 mm. These droplets can still be seen with the naked eye in the first stream of material. If the droplet diameter is less than or equal to 0.1 mm, it is assumed that there has been a complete blending of the streams of material.

For the process of the invention, it is preferable for the second stream of material to be fed coarsely dispersed in the form of droplets into the first stream of material and for these droplets then to be withdrawn in a step (iia) through a nozzle, preferably a slotted nozzle or a screen plate, so that it basically likewise assumes a layer-like shape within the first stream of material.

It is preferable for the second stream of material to be fed into the first stream of material in step (ii) in spiral layers.

It is preferred that in the combination of materials obtained in step (iii), the second stream of material is less solid than the first stream of material.

It is particularly preferable for the second stream of material to comprise a viscous gel, a second meat and/or fish emulsion with texture characteristics different from those of the first stream of material, a gelatine-based liquid and/or a fat/oil mixture, the viscous gel preferably containing a gel-forming substance from the group comprising carboxymethyl cellulose, guar gum and other hydrocolloids, aspic, gelatine and/or broth, the fat/oil mixture comprising a substance selected from margarine, butter, butter fat, drawing grease, palm oil and/or beef suet.

As the second stream of material, it is particularly preferred to use a viscous gel, the viscosity of which may be between 10,000 mPas and 500,000 mPas, measured with a Brookfield viscometer RVDVIII, spindle 7, 20 r.p.m., temperature 20° C.

In accordance with the invention, it is preferably also proposed that the second stream of material comprises vegetable fibres, preferably wheat fibres, oat fibres, cellulose fibres, fibres in the form of powders, such as cellulose powder, sugar beet chip powder or chicory chip powder or mixtures thereof.

It is also proposed that the layers of the second stream of material are preferably 0.2 to 6 mm thick and are spaced apart from one another by 0.5 to 20 mm and/or that when the second stream of material is fed in spirally, the spirals are arranged to be partially overlapping.

As already explained, the second stream of material is preferably fed into the first stream of material in spiral layers. Here, the space between individual spirals of the second stream of material is important in determining whether the intention is to manufacture a more fish-like or meat-like animal feed or foodstuff. More irregular-sized pieces, which consumers prefer, can be obtained if a certain distance is maintained between the individual spirals, since the thinly cut slices do not then have any predetermined breaking points.

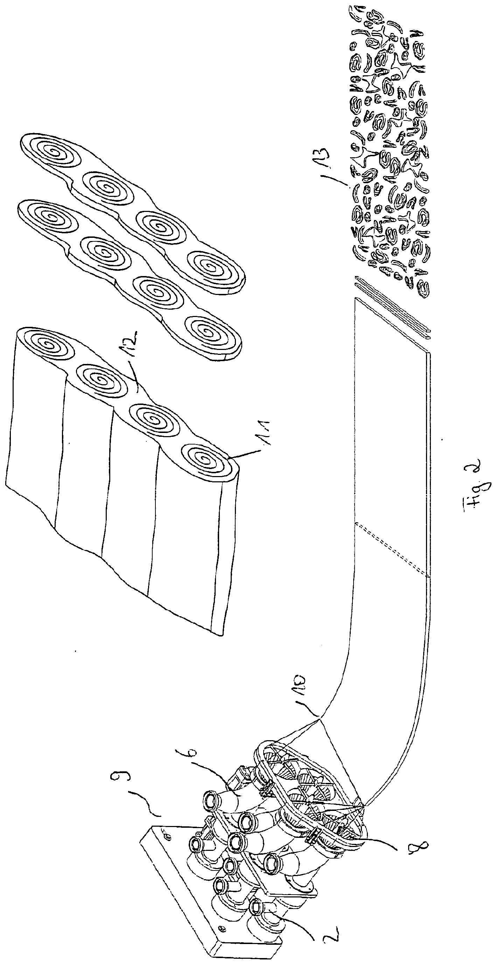

When preparing a fish-like animal feed or foodstuff, an attempt can be made to eliminate the gap between the spirals by partial overlapping so that the structure obtained is present, as far as possible, over the entire width of the material, see also Figure 2 below.

With thicker slices in step (iv), it is then possible in the case of fish-like animal feed or foodstuffs to produce tuna analogues, whereas longitudinal cuts can be used, for example, to produce other fish analogues with the patterns of myosepta typical of fish fillets. It is also possible to obtain large fish fillets with typical patterns of myosepta by means of additional horizontal cuts, such as half-way down the material discharged.

It is particularly preferable that the second stream of material fed in in the form of droplets in a coarsely dispersed manner in step (ii) should have a droplet diameter which is at least as large as the thickness of the slice obtained in step (iv).

In a particularly preferred embodiment, in step (ii), the second stream of material is introduced into the first stream of material by means of an apparatus comprising a hollow shaft, into which the second stream of material is introduced at an input end thereof and is delivered to an exit end, the hollow shaft being substantially concentrically surrounded, at least at the exit end, by a tube via which the first stream of material is transported to the exit end of the hollow shaft, and at the exit end of the hollow shaft, inside the tube, the second stream of material is fed into the first stream of material via a distribution means.

It is also preferable for the distribution means to be an impeller wheel.

It is also proposed that in step (ii), the second stream of material is fed into the first stream of material in a coarsely dispersed manner by means of a static mixer.

After process step (ii), the combination of materials obtained in step (ii) is discharged in a subsequent step (iia) through a nozzle or screen plate in order to provide the combination of materials obtained in a way that facilitates uniform heat treatment/gelling of the proteins. Especially if fish analogues are to be manufactured, it is advisable to shape or withdraw the inclusions of the second stream of material contained in the first stream of material using a flat nozzle or screen plate, in order to obtain a fish fillet-like structure after the final cutting of the solidified combination of materials.

Apart from the possible processes described above for introducing the second stream of material into the first stream of material, a person skilled in the art is well aware of other alternatives not covered by the claimed invention. An alternative of this kind also includes such processes as the one known from EP 1 047 307 B1.

Further alternatives for creating stratified layers of the first and second streams of material, where the material of the second stream of material is preferably intended to serve as a breaking point during the manufacture of the animal feed or foodstuff, may be:
a) creating alternating layers of the materials of the first and second streams of material and subsequently conveying them through a gap.
b) Rapidly conveying the first and second streams of material through two parallel carpet nozzles (slots), where the stratified stream of material "ripples" in the process. The same can also be achieved by weaving two corresponding material nozzles from left to right. Subsequent conveying through a slot, such as is described in EP 1 047 307 B1 for example, then creates the stratification ultimately required.
c) By shooting or rapidly pumping the second stream of material into the first stream of material substantially at a right angle, as a result of which corresponding layers are created when flowing through a screen plate.
d) Using rotating or alternating nozzles/valves, the first stream of material and the second stream of material are pumped into an apparatus alternately. When conveyed through a screen plate the desired layers are created.

It can also be contemplated that this nozzle is a slotted nozzle.

It is particularly preferred that the first and second streams of material are used in a weight ratio of 50:50 to 95:5, based on the total amount of the first and second streams of material, preferably in a weight ratio of 80:20 to 90:10, more preferably 85:15.

The solidification in step (iii) is preferably achieved by applying heat, preferably under sterilising conditions.

The first stream of material may additionally comprises fibrous material and/or cereal flour.

The present invention is based on the surprising finding that the process of the invention allows an animal feed or foodstuff to be manufactured which is very similar in its texture and appearance to natural or original pieces of meat or fish. The animal feed or foodstuffs manufactured by the process of the invention look very natural, have a fibrous texture and comprise pieces of very varied sizes and shapes, so that consumers' expectations regarding such products can be satisfied.

Furthermore, the animal feed or foodstuffs can be manufactured in an extremely simple and inexpensive manner with the process of the invention.

A process in accordance with the invention is particularly preferable in which the second stream of material, after solidification in step (iii), is less solid than the first stream of material. The second stream of material is preferably still liquid or is of lower viscosity relative to the first stream of material.

The second stream of material introduced into the first stream of material basically serves to provide breaking points at which, after the cutting in step (iv), the product manufactured can disintegrate into smaller fragments.

An aspect of crucial importance for the process of the invention is that after solidification in step (iii), the material obtained is cut up into very thin slices with a thickness of 0.6 to 6 mm. As a consequence of this, the arrangement of layers of gel inside the solidified meat or fish emulsion means that these thin slices disintegrate incompletely wherever the layers of gel were located. The result of this is that individual pieces of the animal feed or foodstuff are obtained which have a very natural appearance, are very fibrous and are irregular in shape. If the slices are less than 0.6 mm thick, it is difficult to cut up the solidified stream of material, whereas if the slices are more than 6 mm thick, the incomplete disintegration at the layers of gel does not take place.

It is particularly preferable for the combination of materials obtained after step (ii) to be arranged in the form of a billet which, as already described above, is discharged through a nozzle or screen plate. In step (iv), such a billet can then be cut up into thin slices in any way desired. No importance needs to be attached to a cutting angle relative to the direction of discharge of the billet; cutting may, for example, be carried out substantially perpendicularly to the direction of discharge, or at an angle of about 45° or parallel to the direction of discharge.

Incomplete disintegration of the animal feed or foodstuff manufactured in accordance with the invention is intended to mean disintegration which does not occur at all the layers of gel, which would thus lead to pieces of substantially uniform size and hence to a narrow size distribution, but rather disintegration that leads to pieces of a wide range of sizes and hence to a broad size distribution. This is naturally also explained below in connection with the example described there.

Further features and advantages of the process of the invention will become clear from the following detailed description, in which one embodiment of the invention is illustrated by way of example, with reference to the attached drawing, in which
Fig. 1 schematically shows an apparatus for carrying out the process of the invention, and
Fig. 2 is a simplified illustration which likewise shows an apparatus for carrying out the process of the invention, especially with the process steps (ii) to (v)

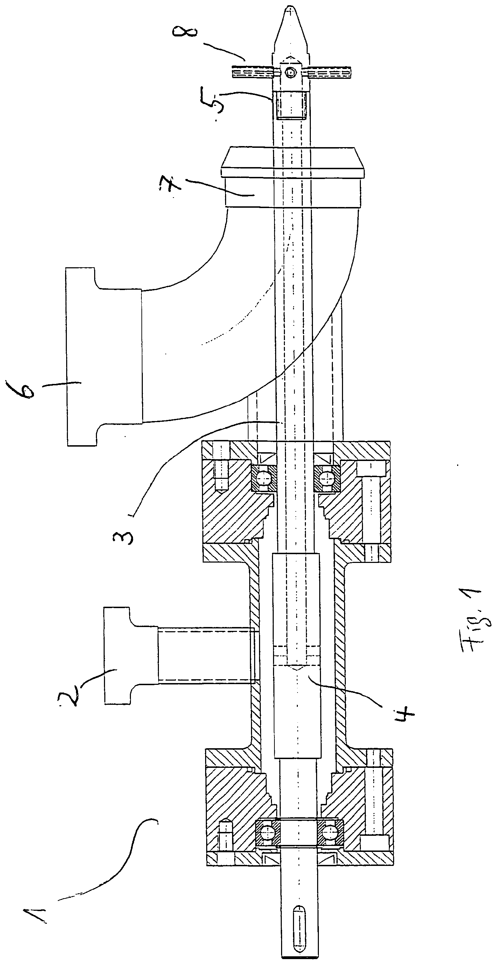

As first and second streams of material for carrying out the process of the invention, it is possible to use ones which are known from DE102006031794A1, for example. An apparatus suitable for carrying out the process of the invention is shown in Fig. 1. When this apparatus 1 is used, a second stream of material is delivered via a feed apparatus 2 in a hollow shaft 3 at an input end 4 of the hollow shaft 3 and fed in the direction of an exit end 5 of the hollow shaft 3. Via a further feed apparatus 6, a first stream of material is fed into a tube 7 which substantially concentrically surrounds the hollow shaft 3 at least in the area of the discharge end 5 and beyond. The first stream of material is guided through the tube 7. For illustration purposes, the tube 7 is not shown projecting beyond the exit end 5 of the hollow shaft 3 in Figure 1. It is, however, obvious to any person skilled in the art that that tube 7 must project beyond the exit end 5 of the hollow shaft 3. At or shortly after the exit end 5 of the hollow shaft 3 is disposed a distribution means 8, preferably an impeller wheel. When the impeller wheel 8 is turned, a second stream of material arriving at the exit end 5 is introduced into the first stream of material substantially spirally. The thickness and spacing of the layers of the second stream of material can be adjusted by means of an appropriate choice of impeller wheel and its speed of rotation. Via the tube 7, the product obtained in accordance with the invention by introducing the second stream of material can be further processed, by first discharging the product through a nozzle. The nozzle used for this purpose may, for example, have cross-sections of the kind shown in Figure 3 of DE102006031794.

Fig. 2 shows a further general embodiment of an apparatus for carrying out the process of the invention. Here, first and second streams of material are in each case delivered via four feed apparatuses 2 or feed apparatuses 6 to an apparatus 9, which can then be processed, as described with regard to Fig. 1, via distribution means 8, of which there are a total of four in this case. After the second stream of material has been introduced into the first stream of material, the combined stream of material is preferably discharged via a slotted nozzle 10 and then delivered to a solidification apparatus (not shown). This solidification apparatus may, for example, be a steam tunnel, in which the product is preferably also sterilised. More extensive and final sterilisation of the animal feed and foodstuff manufactured may, however, also be carried out after packing, for instance also together with a gravy. As can be seen from the combined stream of material shown in cross-section form in Fig. 2, a total of four impeller wheels are provided for introducing the second stream of material into the first stream of material. Those four spiral-shaped second streams of material are not arranged to overlap, so that in the course of the disintegration that occurs during slicing, pieces of very varying sizes are obtained; for example, the regions of the first stream of material in which no second stream of material has been introduced do not disintegrate at all, so that it is possible to speak in general of the "incomplete" disintegration of a stream of material of this kind. It is easy for a person skilled in the art to understand that the arrangement of the second streams of material introduced in a spiral shape, e.g. through the degree of overlapping or not, the distance between the individual layers and the thickness the layers of the second stream of material, makes it possible to obtain pieces varying widely in size and thus also a wide size range distribution. Fig. 2 shows a cross-section through the combined streams of material after solidification in step (iv), but before slicing. The second stream of material 11, introduced in a spiral-shaped layer structure, can clearly be recognised inside a first stream of material 12.

The combined stream of material solidified in the solidification apparatus is then cut, substantially perpendicularly to the discharge direction, into thin slices with a thickness of 0.6 to 6 mm, as can likewise be seen from Fig. 2. The slices cut in this way can be further processed, such as by being transported further on a conveyor-belt. The thin nature of these slices means that during further transport, they disintegrate incompletely at the layers of gel, ultimately resulting in pieces of meat or fish 13 which are very similar in appearance and texture to natural pieces of meat or fish.

After the thin slices have disintegrated incompletely, the pieces of product obtained can be further processed, such as packed and then sterilised.

## Claims

1. A process for manufacturing an animal feed or foodstuff, comprising the steps of:
(i) providing at least one first stream of material comprising a meat and/or fish emulsion, and at least one second stream of material comprising at least one gel-forming and/or gel-like substance,
(ii) feeding the second stream of material into the first stream of material in the form of layers, and/or
coarsely dispersing the second stream of material into the first stream of material in the form of droplets with a size of at least 0.3 to 8 mm,
(iia) discharging the combination of materials obtained in step (ii) through a nozzle or screen plate,
(iii) solidifying at least the first stream of material contained in the combination of materials obtained in step (ii), and
(iv) cutting the combination of materials obtained in step (iii), substantially perpendicularly to the discharge direction, into slices with a thickness of 0.6 - 6 mm,
wherein the slices disintegrate incompletely into pieces, wherein incomplete disintegration means disintegration which does not occur at all the layers of gel.

2. A process as claimed in Claim 1 wherein the second stream of material is fed into the first stream of material in step (ii) in spiral layers.

3. A process as claimed in Claim 1 or Claim 2 wherein in the combination of materials obtained in step (iii), the second stream of material is less solid than the first stream of material.

4. A process as claimed in any one of the preceding claims wherein the second stream of material comprises a viscous gel, a second meat and/or fish emulsion with texture characteristics different from those of the first stream of material, a gelatine-based liquid and/or a fat/oil mixture, the viscous gel preferably containing a gel-forming substance from the group comprising carboxymethyl cellulose, guar gum and other hydrocolloids, aspic, gelatine and/or broth, the fat/oil mixture comprising a substance selected from margarine, butter, butter fat, drawing grease, palm oil and/or beef suet.

5. A process as claimed in any one of the preceding claims, wherein the second stream of material comprises vegetable fibres, preferably wheat fibres, oat fibres, cellulose fibres, fibres in the form of powders, such as cellulose powder, sugar beet chip powder or chicory chip powder or mixtures thereof.

6. A process as claimed in any one of the preceding claims wherein the layers of the second stream of material are 0.2 to 6.0 mm thick and are spaced apart from one another by 0.5 to 20 mm and/or that when the second stream of material is fed in spirally, the spirals are arranged to be partially overlapping.

7. A process as claimed in any one of the preceding claims wherein in the second stream of material fed in step (ii) in the form of droplets in a coarsely dispersed manner has a droplet diameter which is at least as large as the thickness of the slice obtained in step (iv).

8. A process as claimed in any one of the preceding claims wherein in step (ii) the second stream of material is fed into the first stream of material by means of an apparatus comprising a hollow shaft, into which the second stream of material is introduced at an input end thereof and is delivered to an exit end, the hollow shaft being substantially concentrically surrounded, at least at the exit end, by a tube via which the first stream of material is transported to the exit end of the hollow shaft, and at the exit end of the hollow shaft, inside the tube, the second stream of material is introduced into the first stream of material via at least one distribution means.

9. A process as claimed in claim 8 wherein the distribution means is an impeller wheel.

10. A process as claimed in any one of the preceding claims wherein in step (ii) the second stream of material is fed into the first stream of material in a coarsely dispersed manner by means of a static mixer.

11. A process as claimed in any of the preceding claims wherein the first and second streams of material are used in a weight ratio of 50:50 to 95:5, based on the total amount of the first and second streams of material, preferably in a weight ratio of 80:20 to 90: 10, more preferably 85: 15.

12. A process as claimed in any of the preceding claims wherein the solidification in step (iii) is performed by applying heat, preferably under sterilising conditions.

13. A process as claimed in any of the preceding claims wherein the first stream of material additionally comprises fibrous material and/or cereal flour.

## Patentansprüche

1. Verfahren zur Herstellung eines Futter- oder Lebensmittels, welches die Schritte umfasst:
(i) Bereitstellen zumindest eines ersten Materialstroms, der eine Fleisch- und/oder Fischemulsion umfasst, und zumindest eines zweiten Materialstroms, der zumindest eine gelbildende und/oder gelartige Substanz umfasst,
(ii) Eintragen des zweiten Materialstroms in den ersten Materialstrom in der Form von Schichten, und/oder
grobes Dispergieren des zweiten Materialstroms in dem ersten Materialstrom in der Form von Tröpfchen mit einer Größe von wenigstens 0,3 bis 8 mm,
(iia) Abgeben der in Schritt (ii) erhaltenen Materialkombination durch eine Düse oder Schlitzplatte,
(iii) Verfestigen zumindest des in der in Schritt (ii) erhaltenen Materialkombination enthaltenen ersten Materialstroms, und
(iv) Schneiden der in Schritt (iii) erhaltenen Materialkombination, im wesentlichen senkrecht zur Abgaberichtung, in Scheiben mit einer Dicke von 0,6-6 mm,
wobei die Scheiben unvollständig in Stücke zerfallen, wobei ein unvollständiger Zerfall einen Zerfall bedeutet, der nicht an allen Gelschichten stattfindet.

2. Verfahren nach Anspruch 1, wobei der zweite Materialstrom in spiralförmigen Schichten in Schritt (ii) in den ersten Materialstrom eingetragen wird.

3. Verfahren nach Anspruch 1 oder 2, wobei in der in Schritt (iii) erhaltenen Materialkombination der zweite Materialstrom eine geringere Festigkeit aufweist als der erste Materialstrom.

4. Verfahren nach einem der vorangehenden Ansprüche, wobei der zweite Materialstrom ein viskoses Gel, eine zweite Fleisch- und/oder Fischemulsion mit zum ersten Materialstrom unterschiedlichen Textureigenschaften, eine Flüssigkeit auf Gelatinebasis und/oder eine Fett/Öl-Mischung umfasst, wobei das viskose Gel bevorzugt eine gelbildende Substanz aus der Gruppe enthält, die Carboxymethylcellulose, Guargummi und andere Hydrokolloide, Aspik, Gelatine und/oder Bouillon umfasst, wobei die Fett/Öl-Mischung eine Substanz umfasst, die ausgewählt ist aus Margarine, Butter, Butterfett, Ziehfett, Palmöl und/oder Rindertalg.

5. Verfahren nach einem der vorangehenden Ansprüche, wobei der zweite Materialstrom Pflanzenfasern umfasst, vorzugsweise Weizenfasern, Haferfasern, Cellulosefasern, Fasern in Form von Pulvern, wie Cellulosepulver, Zuckerrübenschnitzel-Pulver oder Chicoreeschnitzel-Pulver oder Mischungen derselben.

6. Verfahren nach einem der vorangehenden Ansprüche, wobei die Schichten des zweiten Materialstroms eine Dicke von 0,2 bis 6,0 mm und einen Abstand zueinander von 0,5 bis 20 mm aufweisen und/oder dass bei einem spiralförmigen Eintrag des zweiten Materialstroms die Spiralen teilweise überlappend ausgebildet sind.

7. Verfahren nach einem der vorangehenden Ansprüche, wobei der in Form von Tröpfchen grob dispergiert eingetragene zweite Materialstrom in Schritt (ii) einen Tröpfchendurchmesser aufweist, der zumindest so groß ist wie die Dicke der in Schritt (iv) erhaltenen Scheibe.

8. Verfahren nach einem der vorangehenden Ansprüche, wobei in Schritt (ii) der zweite Materialstrom in den ersten Materialstrom mittels einer Vorrichtung eingebracht wird, die eine Hohlwelle umfasst, in die der zweite Materialstrom an einem Zugabeende derselben eingeführt und zu einem Austrittsende geführt wird, wobei die Hohlwelle zumindest am Austrittsende von einem Rohr im wesentlichen konzentrisch umgeben ist, über das der erste Materialstrom zum Austrittsende der Hohlwelle geführt wird, wobei am Austrittsende der Hohlwelle innerhalb des Rohres über zumindest eine Verteilungsvorrichtung der zweite Materialstrom in den ersten Materialstrom eingebracht wird.

9. Verfahren nach Anspruch 8, wobei die Verteilungsvorrichtung ein Flügelrad ist.

10. Verfahren nach einem der vorangehenden Ansprüche, wobei in Schritt (ii) der zweite Materialstrom grob dispers in den ersten Materialstrom mittels eines statischen Mischers eingetragen wird.

11. Verfahren nach einem der vorangehenden Ansprüche, wobei der erste und der zweite Materialstrom in einem Gewichtsverhältnis von 50:50 bis 95:5 eingesetzt werden, basierend auf der Gesamtmenge der ersten und zweiten Materialströme, und bevorzugt in einem Gewichtsverhältnis von 80:20 bis 90:10, noch bevorzugter 85:15.

12. Verfahren nach einem der vorangehenden Ansprüche, wobei die Verfestigung in Schritt (iii) durch Beaufschlagung mit Hitze erfolgt, vorzugsweise unter sterilisierenden Bedingungen.

13. Verfahren nach einem der vorangehenden Ansprüche, wobei der erste Materialstrom zusätzlich faserartiges Material und/oder Getreidemehl umfasst.

## Revendications

1. Procédé de fabrication d'aliments ou de produits alimentaires pour animaux comprenant les étapes consistant à :
(i) fournir au moins un premier flux de matière comprenant une émulsion de viande et/ou de poisson, et au moins un deuxième flux de matière comprenant au moins une substance gélifiante et/ou analogue à un gel,
(ii) introduire le deuxième flux de matière dans le premier flux de matière sous forme de couches, et/ou
disperser grossièrement le deuxième flux de matière dans le premier flux de matière sous forme de gouttelettes d'une taille d'au moins 0,3 à 8 mm,
(iia) déverser la combinaison de matière obtenue à l'étape (ii) à travers une buse ou une plaque de tamisage,
(iii) solidifier au moins le premier flux de matière contenu dans la combinaison de matière obtenue à l'étape ii), et
(iv) découper la combinaison de matières obtenue à l'étape (iii) ; sensiblement perpendiculairement à la direction de déversement, en tranches d'une épaisseur de 0,6 à 6 mm,
dans lequel les tranches se désintègrent incomplètement en morceaux, une désintégration incomplète signifiant une désintégration qui ne se produit pas dans toutes les couches de gel.

2. Procédé tel que revendiqué dans la revendication 1. dans lequel le deuxième flux de matière est introduit dans le premier flux de matière à l'étape (ii) en couches spiralées.

3. Procédé tel que revendiqué dans la revendication 1 ou dans la revendication 2, dans lequel dans la combinaison de matières obtenue à l'étape (iii), le deuxième flux de matière est moins compact que celle du premier flux de matière.

4. Procédé tel que revendiqué dans l'une quelconque des revendications précédentes, dans lequel le deuxième flux de matière comprend un gel visqueux, une deuxième émulsion de viande et/ou de poisson dont les caractéristiques de texture sont différentes de celles du premier flux de matière, un liquide à base de gélatine et/ou un mélange de graisse/huile, le gel visqueux contenant de préférence une substance gélifiante appartenant au groupe comprenant de la cellulose de carboxyméthyle, de la gomme de guar et d'autres hydrocolloïdes, de l'aspic, de la gélatine, et/ou du bouillon, le mélange de graisse/huile comprenant une substance sélectionnée parmi la margarine, le beurre, la matière grasse du beurre, la graisse à dessin, l'huile de palmier et/ou le suif de bœuf.

5. Procédé tel que revendiqué dans l'une quelconque des revendications précédentes, dans lequel le deuxième flux de matière comprend des fibres végétales, de préférence des fibres de blé, des fibres d'avoine, des fibres de cellulose, des fibres sous forme de poudres, telle que la poudre de cellulose, la poudre de chips de betterave sucrière ou la poudre de chips de chicorée ou des mélanges de celles-ci.

6. Procédé tel que revendiqué dans l'une quelconque des revendications précédentes, dans lequel les couches du deuxième flux de matière ont une épaisseur de 0,2 à 6,0 mm et sont espacées l'une de l'autre de 0,5 à 20 mm et/ou lorsque le deuxième flux de matière est introduit en spirales, les spirales sont disposées de manière à se chevaucher partiellement.

7. Procédé tel que revendiqué dans l'une quelconque des revendications précédentes, dans lequel le deuxième flux de matière introduit à l'étape (ii) sous forme de gouttelettes d'une manière grossièrement dispersée a un diamètre des gouttelettes au moins aussi grand que l'épaisseur de la tranche obtenue à l'étape (iv).

8. Procédé tel que revendiqué dans l'une quelconque des revendications précédentes, dans lequel à l'étape (ii) le deuxième flux de matière est introduit dans le premier flux de matière au moyen d'un appareil comprenant un arbre creux dans lequel le deuxième flux de matière est introduit à une extrémité d'entrée de celui-ci et est livré à une extrémité de sortie, l'arbre creux étant sensiblement entouré concentriquement, au moins à l'extrémité de sortie, par un tube par le biais duquel le premier flux de matière est transporté jusqu'à l'extrémité de sortie de l'arbre creux, et au niveau de l'extrémité de sortie de l'arbre creux, à l'intérieur du tube, le deuxième flux de matière est introduit dans le premier flux de matière par le biais d'au moins un moyen de distribution.

9. Procédé tel que revendiqué dans la revendication 8 dans lequel le moyen de distribution est une roue de turbine.

10. Procédé tel que revendiqué dans l'une quelconque des revendications précédentes, dans lequel à l'étape (ii) le deuxième flux de matière est introduit dans le premier flux de matière d'une manière grossièrement dispersée au moyen d'un mélangeur statique.

11. Procédé tel que revendiqué dans l'une quelconque des revendications précédentes, dans lequel les premier et deuxième flux de matière sont utilisés à un rapport pondéral de 50 : 50 à 95 : 5, par rapport à la quantité totale des premier et deuxième flux de matière, de préférence à un rapport pondéral de 80 : 20 à 90 : 10, plus préférablement à un rapport pondéral de 85 : 15.

12. Procédé tel que revendiqué dans l'une quelconque des revendications précédentes, dans lequel la solidification à l'étape (iii) est réalisée en appliquant de la chaleur, préférablement sous des conditions de stérilisation.

13. Procédé tel que revendiqué dans l'une quelconque des revendications précédentes, dans lequel le premier flux de matière comprend en outre des matières fibreuses et/ou de la farine de céréales.
